# EUROPEAN PATENT SPECIFICATION

(11) **EP 3 141 759 B1**
(45) Date of publication and mention of the grant of the patent: **24.06.2020**
(21) Application number: 15831978.0
(22) Date of filing: 06.08.2015
(51) Int. Cl.: F04D 29/08, F04D 7/02, F04D 13/04, F04D 29/04, F16J 15/44, F16J 15/447, F04D 29/049, F04D 29/06, F04D 29/10, F04D 29/58, F01D 5/18, F01D 25/18

(54) **TURBO PUMP**
TURBOPUMPE
TURBOPOMPE

(30) Priority: 15.08.2014 JP 2014165355
(43) Date of publication of application: 15.03.2017
(73) Proprietor: IHI Corporation, Tokyo 135-8710 (JP)
(72) Inventor: MIHARA Rei, Tokyo 135-8710 (JP); KAKUTA Tomoya, Tokyo 135-8710 (JP)
(74) Representative: MERH-IP Matias Erny Reichl Hoffmann Patentanwälte PartG mbB
(86) International application number: PCT/JP2015/072351
(87) International publication number: WO 2016/024518

(56) References cited:
- WO-A1-91/17341
- RU-C1- 2 299 344
- US-A- 4 648 794
- US-A- 4 664 605
- US-A- 4 867 633
- US-A1- 2003 044 269
- US-A1- 2013 227 931

## Description

### Technical Field

The present invention relates to a turbo pump.

Priority is claimed on Japanese Patent Application No. 2014-165355, filed August 15, 2014.

### Background Art

In a rocket engine or the like, a so-called turbo pump is used in order to supply a propellant such as liquid hydrogen or liquid oxygen. Such a turbo pump has a configuration in which an impeller for pressurizing and pumping liquid and a turbine disk provided with a blade cascade are connected by a shaft. Such a shaft is rotatably supported by a bearing as shown in, for example, Patent Document 1. Such a bearing generates frictional heat due to the high-speed rotation of the shaft, and therefore, the bearing is cooled by a propellant having a very low temperature.

A turbopump, in particular for feeding rocket engines is known from, for example, Patent Document 2, wherein the turbopump for feeding a low-thrust rocket engine comprises a pump, a turbine, and a common rotary shaft connected to the pump and to the turbine. First and second bearings closer respectively to the pump and to the turbine serve to support the common shaft. The second bearing is a hydrodynamic bearing connected to a gas supply source, and the turbopump also includes at least one dynamic sealing gasket around the shaft and interposed between the first and second bearings.

Further, a device for separation of the pump and the turbine of the booster turbo-pump aggregate of the liquid propellant rocket engine is known from, for example, Patent Document 3, wherein the device consists of the pump, the turbine, the separating cavity located between the pump and the turbine and the external intake tract. The separating cavity is limited from the side of the pump by the shaft gasket, which diameter is made smaller than the diameter of the shaft in the area of the seat of the bearing of the turbine, and from the side of the turbine - by the unloading disk aligned with the turbine impeller. On the turbine impeller there is the gasket of the unloading disk. The axial impeller of the pump and the turbine impeller are fixed on the shaft. From the direction of the turbine the shaft rests on the turbine bearing, which is brought out beyond the bounds of the separating cavity and is installed from the direction of the pump. The cavity of the turbine bearing which is adjoining the shaft gasket is connected by the delivery channels with the pump outlet.

Moreover, a pump with high speed expeller is known from, for example, Patent Document 4, wherein sealing mechanisms for the shaft of the rotary pump, and more particularly pumps having rotatable expellers are described.

### Citation List

### Patent Document

[Patent Document 1] Japanese Unexamined Patent Application, First Publication No. 2011-226632
[Patent Document 2] US Patent Application US 2013/227931 A1
[Patent Document 3] Russian Patent RU 2 299 344 C1
[Patent Document 4] US Patent Application US 4 648 794 A

### Summary of Invention

### Technical Problem

A space in which the bearing is accommodated and a space in which the turbine disk is accommodated are isolated by a seal part composed of a clearance seal or the like. Here, it is desirable that the total amount of the propellant used for the cooling of the bearing is recovered and used. However, the shaft rotates, and therefore, it is not possible to reduce the leakage amount in the seal part to zero, and in reality, part of the propellant leaks into the space in which the turbine disk is accommodated.

For this reason, for example, when the leakage of the propellant to the space in which the turbine disk is accommodated has to be further reduced, a configuration is adopted in which a so-called slinger (vaporizer) is disposed between the seal part and the bearing. The slinger is a rotating part having a plurality of wings, and is mounted on the shaft, and thus rotates along with the shaft, thereby decompressing and vaporizing the propellant. Due to this, the propellant in the seal part becomes a gas and has a very large volume, as compared to a liquid, and therefore, it is possible to reduce the leakage amount in the seal part.

However, the slinger is rotated, whereby the propellant around the slinger becomes heated. Here, when the pressure of the propellant which is supplied to the bearing for the cooling is low or the flow rate of the propellant is small, since the propellant has a characteristic of being easily vaporized due to temperature rising, the temperature of the propellant around the bearing rises due to heat generated by the slinger, and in the worst case, the propellant leads to vaporization. There is a possibility that this may become a cause of insufficient cooling of the bearing.

The present invention is made in view of the above-described circumstances and has an object to prevent, in a turbo pump in which a bearing rotatably supporting a shaft is cooled by cryogenic liquid such as a propellant of a rocket engine or the like, rise of the temperature of the cryogenic liquid around the bearing due to heat generated by a slinger and vaporization of the cryogenic liquid in the worst case.

### Solution to Problem

In a first aspect of the present invention, there is provided a turbo pump which includes: an impeller which pressurizes liquid; a turbine disk at which a blade cascade is provided; a shaft which connects the impeller and the turbine disk; a bearing which rotatably supports the shaft; a housing which accommodates the impeller, the turbine disk, the shaft, and the bearing; a seal part which is provided between the bearing and the turbine disk, wherein the bearing is cooled by a cryogenic liquid; the turbo pump further comprises: a slinger which is disposed between the bearing and the seal part and has a disk which is fixed to the shaft, and a plurality of wing parts which are provided on the seal part side of the disk; and a partition wall which partitions the inside of the housing into a pressure reduction chamber in which the wing parts of the slinger are disposed, and a bearing accommodation chamber in which the bearing is accommodated, the pressure reduction chamber and the bearing accommodation chamber being connected to each other through a clearance flow path.

In a second aspect of the present invention, in accordance with the first aspect, the pressure reduction chamber is provided to extend further to the outside in a radial direction of the shaft than the wing parts of the slinger.

In a third aspect of the present invention, in accordance with the first or second aspect, the clearance flow path is formed between the disk of the slinger and the partition wall.

In a fourth aspect of the present invention, in accordance with any one of the first to third aspects, the partition wall is provided as a part of the housing.

In a fifth aspect of the present invention, in accordance with any one of the first to fourth aspects, the turbo pump further includes: a projection portion which is provided at the partition wall or the disk of the slinger and disposed in the clearance flow path.

### Effects of Invention

According to the present invention, the inside of the housing is partitioned into the pressure reduction chamber in which the wing parts of the slinger for decompressing liquid are accommodated, and the bearing accommodation chamber in which the bearing is accommodated, by the partition wall. A fluid can come in and out between the pressure reduction chamber and the bearing accommodation chamber through the clearance flow path. However, the movement of the fluid from an area in which the wing parts of the slinger are provided, to an area in which the bearing is provided, becomes very small, as compared to a case where there is no partition wall. For this reason, it is possible to suppress heat generated in the vicinity of the wing parts of the slinger from being transmitted to the surroundings of the bearing, and thus it is possible to prevent liquid from rising in temperature or vaporizing around the bearing. Therefore, according to the present invention, in the turbo pump in which the bearing rotatably supporting the shaft is cooled by cryogenic liquid such as a propellant of a rocket engine or the like, it becomes possible to prevent the cryogenic liquid around the bearing from rising in temperature or vaporizing due to heat which is generated by the slinger.

### Brief Description of Drawings

FIG. 1A is a sectional view schematically showing a schematic configuration of a turbo pump in a first embodiment of the present invention.
FIG. 1B is an enlarged view of an area A of FIG. 1A.
FIG. 2 is a perspective view of a slinger with which the turbo pump in the first embodiment of the present invention is provided.
FIG. 3A is a diagram showing a simulation result verifying fluid velocity in the vicinity of a slinger of a turbo pump of the related art, by using a velocity contour line.
FIG. 3B is a diagram showing a simulation result verifying fluid velocity in the vicinity of the slinger of the turbo pump of the first embodiment of the present invention, by using a velocity contour line.
FIG. 4 is an enlarged view of the vicinity of a slinger of a turbo pump in a second embodiment of the present invention.
FIG. 5A is a diagram showing a simulation result verifying fluid velocity in the vicinity of a slinger of a turbo pump which does not have projection portions, by using a velocity contour line.
FIG. 5B is a diagram showing a simulation result verifying fluid velocity in the vicinity of the slinger of the turbo pump of the second embodiment of the present invention, by using a velocity contour line.

### Description of Embodiments

Hereinafter, an embodiment of a turbo pump according to the present invention will be described with reference to the drawings. In the following drawings, in order to show each member in a recognizable size, the scale of each member is appropriately changed.

### (First Embodiment)

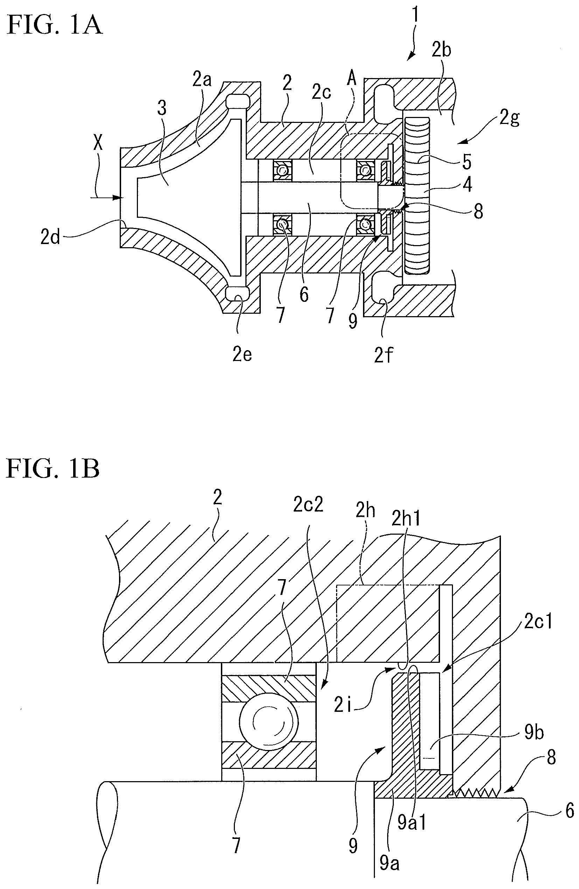

FIG. 1A is a sectional view schematically showing a schematic configuration of a turbo pump 1 of this embodiment.

FIG. 1B is an enlarged view of an area A of FIG. 1A. As shown in FIG. 1A, the turbo pump 1 of this embodiment is provided with a housing 2, an impeller 3, a turbine disk 4, a blade cascade 5, a shaft 6, a bearing 7, a seal part 8, and a slinger 9.

The housing 2 is a casing which accommodates the impeller 3, the turbine disk 4, the blade cascade 5, the shaft 6, the bearing 7, and the slinger 9. The housing 2 is provided with an impeller accommodation space 2a which accommodates the impeller 3 on the inside, a turbine disk accommodation space 2b which accommodates the turbine disk 4, and a central accommodation space 2c which accommodates the shaft 6, the bearing 7, and the slinger 9.

Further, the housing 2 has a pump inlet opening 2d which is open toward a direction in which the axis of the shaft 6 extends, and introduces a propellant X (cryogenic liquid) into the impeller accommodation space 2a. Further, the housing 2 has a scroll flow path 2e which is provided so as to be wound radially outside of the impeller 3 and is for discharging the propellant X raised in pressure by the impeller 3 to the outside of the turbo pump 1. Further, the housing 2 has an introduction flow path 2f which is provided radially outside of the turbine disk 4 and supplies gas for turbine drive to the turbine disk accommodation space 2b. Further, the housing 2 has a turbine exhaust port 2g which is provided on the side opposite to the pump inlet opening 2d and exhausts combustion gas which has passed through the turbine disk 4.

Further, in this embodiment, the housing 2 has a partition wall 2h which partitions the central accommodation space 2c (that is, the inside of the housing 2) into a pressure reduction chamber 2c1 and a bearing accommodation chamber 2c2, as shown in FIG. 1B. The partition wall 2h is provided as part of the housing 2 and annularly provided around the shaft 6 and so as to surround the shaft 6.

The pressure reduction chamber 2c1 is an area in which a wing part 9b (described later) of the slinger 9 is disposed, and is provided on the turbine disk 4 side of the central accommodation space 2c. In the pressure reduction chamber 2c1, the wing part 9b is rotated by the rotation of the slinger 9, whereby the propellant X is decompressed and vaporized. Further, the pressure reduction chamber 2c1 is provided to extend to the outside of the wing part 9b of the slinger 9 in a radial direction of the shaft 6. In this embodiment, the length of the pressure reduction chamber 2c1 in the radial direction of the shaft 6 is made to be about double the length of the wing part 9b in the radial direction of the shaft 6.

The bearing accommodation chamber 2c2 is an area in which the bearing 7 is provided, and is provided on the impeller 3 side of the central accommodation space 2c. The propellant X for cooling the bearing 7 is directly supplied to the bearing accommodation chamber 2c2. The propellant X supplied to the bearing accommodation chamber 2c2 cools the bearing 7 and thereafter, is generally returned to the impeller 3.

The pressure reduction chamber 2c1 and the bearing accommodation chamber 2c2 are connected by a clearance flow path 2i. The clearance flow path 2i is formed between the partition wall 2h and a disk 9a (described later) of the slinger 9. That is, the clearance flow path 2i is formed between an inner peripheral surface 2h1 of the partition wall 2h and an outer peripheral surface 9a1 of the disk 9a of the slinger 9. The length in the radial direction of the shaft 6 of the clearance flow path 2i is set such that the propellant X which has been supplied to the bearing accommodation chamber 2c2 and thereafter flowed into the pressure reduction chamber 2c1 through the clearance flow path 2i does not flow back to the bearing accommodation chamber 2c2 through the clearance flow path 2i again. For this reason, for example, the length in the radial direction of the shaft 6 of the clearance flow path 2i is made to be a sufficiently smaller value than, for example, about a fraction of, the length of the wing part 9b of the slinger 9 in the radial direction of the shaft 6.

In this manner, in the turbo pump 1 of this embodiment, the partition wall 2h is provided as part of the housing 2, and the central accommodation space 2c of the housing 2 is partitioned into the pressure reduction chamber 2c1 and the bearing accommodation chamber 2c2 which are connected to each other through the clearance flow path 2i, by the partition wall 2h.

The impeller 3 is a radial impeller accommodated in the impeller accommodation space 2a formed in the housing 2. The impeller 3 is connected to a first end of the shaft 6 and rotated about the shaft 6 by rotary power which is transmitted from the turbine disk 4. The impeller 3 is rotated in this manner, thereby pressurizing the propellant X which is introduced from the pump inlet opening 2d into the housing 2, and sending the propellant X to the scroll flow path 2e side.

The turbine disk 4 is accommodated in the turbine disk accommodation space 2b formed in the housing 2. The turbine disk 4 is a circular disc-shaped member which is connected to a second end of the shaft 6 on the side opposite to the first end of the shaft 6, to which the impeller 3 is connected. The blade cascade 5 is provided on the outer peripheral surface of the turbine disk 4. The blade cascade 5 is formed by a plurality of blades which are disposed at regular intervals in a circumferential direction of the shaft 6. A turbine is formed by the turbine disk 4 and the blade cascade 5, and rotary power is generated from the energy of turbine drive gas which is supplied into the housing 2 through the introduction flow path 2f. The turbine drive gas which has passed through the turbine disk 4 and the blade cascade 5 is discharged to the outside of the housing 2 through the turbine exhaust port 2g.

As described above, the shaft 6 is connected to the impeller 3 at the first end and to the turbine disk 4 at the second, thereby connecting the impeller 3 and the turbine disk 4. The shaft 6 connects the impeller 3 and the turbine disk 4 through the central accommodation space 2c formed in the housing 2 and transmits the rotary power generated on the turbine disk 4 side to the impeller 3.

Generally, two or four bearings 7 are provided to be spaced apart from each other in an extending direction of the shaft 6 in the central accommodation space 2c formed in the housing 2. The bearings 7 rotatably support the shaft 6.

The seal part 8 is provided at a boundary portion between the turbine disk accommodation space 2b and the central accommodation space 2c (that is, between the bearing 7 and the turbine disk 4) and prevents the propellant X from leaking out from the central accommodation space 2c to the turbine disk accommodation space 2b. In this embodiment, as the seal part 8, a so-called labyrinth seal mechanism which is a non-contact seal is adopted.

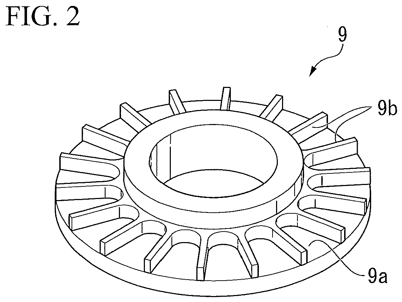

FIG. 2 is a perspective view of the slinger 9. The slinger 9 is disposed between the bearing 7 (the bearing 7 closest to the seal part 8) and the seal part 8 and composed of the disk 9a and a plurality of wing parts 9b, as shown in FIG. 2.

The disk 9a is a circular disc-shaped site which supports the wing parts 9b, and is fixed to the shaft 6 such that the front and rear surfaces of the disk 9a face in the extending direction of the shaft 6, as shown in FIG. 1. The plurality of wing parts 9b are radially provided on the surface (hereinafter referred to as a front surface) on the seal part 8 side of the disk 9a fixed to the shaft 6, and are arranged at regular intervals. The height (the length in a vertical direction from the front surface of the disk 9a) of the wing part 9b is set to be slightly smaller than the distance from the front surface of the disk 9a to an inner wall of the housing 2, as shown in FIG. 1B. Accordingly, the wing parts 9b are rotated in a state of leaving a minimum clearance from the inner wall of the housing 2.

In the turbo pump 1 of this embodiment having such a configuration, if the gas for turbine drive flows into the turbine disk accommodation space 2b through the introduction flow path 2f, the blade cascade 5 receives combustion gas, whereby the turbine disk 4 is rotated, and thus rotary power is generated.

The generated rotary power is transmitted to the impeller 3 through the shaft 6, whereby the impeller 3 is rotated. The impeller 3 is rotated, whereby the propellant X supplied from the pump inlet opening 2d to the impeller accommodation space 2a is raised in pressure and is discharged through the scroll flow path 2e.

Further, while the turbo pump 1 of this embodiment is driven in this manner, the propellant X is supplied to the bearing accommodation chamber 2c2 of the central accommodation space 2c in order to cool the bearings 7 which are heated by frictional heat. The propellant X cools the bearings 7 and thereafter, is generally returned to the impeller 3.

Here, part of the propellant X supplied to the bearing accommodation chamber 2c2 flows into the pressure reduction chamber 2c1 through the clearance flow path 2i. The propellant X which has flowed into the pressure reduction chamber 2c1 is decompressed and vaporized by the wing parts 9b of the slinger 9 which is rotated along with the shaft 6, thereby expanding, whereby volume increases. Further, the seal part 8 is provided at a boundary portion between the pressure reduction chamber 2c1 and the turbine disk accommodation space 2b. For this reason, the amount of the propellant X which leaks out from the pressure reduction chamber 2c1 to the turbine disk accommodation space 2b becomes a very small amount.

According to the turbo pump 1 of this embodiment, the central accommodation space 2c which is the inside of the housing 2 is partitioned into the pressure reduction chamber 2c1 and the bearing accommodation chamber 2c2 by the partition wall 2h. The propellant X can come in and out between the pressure reduction chamber 2c1 and the bearing accommodation chamber 2c2 through the clearance flow path 2i. However, the movement of the propellant X from an area (the pressure reduction chamber 2c1) in which the wing parts 9b of the slinger 9 are provided, to an area (the bearing accommodation chamber 2c2) in which the bearing 7 is provided, becomes very small, as compared to a case where there is no partition wall 2h. For this reason, heat generated in the vicinity of the wing parts 9b of the slinger 9 can be suppressed from being transmitted to the surroundings of the bearing 7, and thus the propellant X can be prevented from rising in temperature or vaporizing around the bearing 7. Therefore, according to the turbo pump 1 of this embodiment, in the turbo pump 1 in which the bearing 7 rotatably supporting the shaft 6 is cooled by the propellant X of a rocket engine, which is cryogenic liquid, it becomes possible to prevent the propellant X around the bearing 7 from rising in temperature or vaporizing due to heat which is generated by the slinger 9. Accordingly, it becomes possible to prevent the wear of the bearing 7 from increasing due to insufficient cooling, and it becomes possible to prevent seizure from occurring in the worst case.

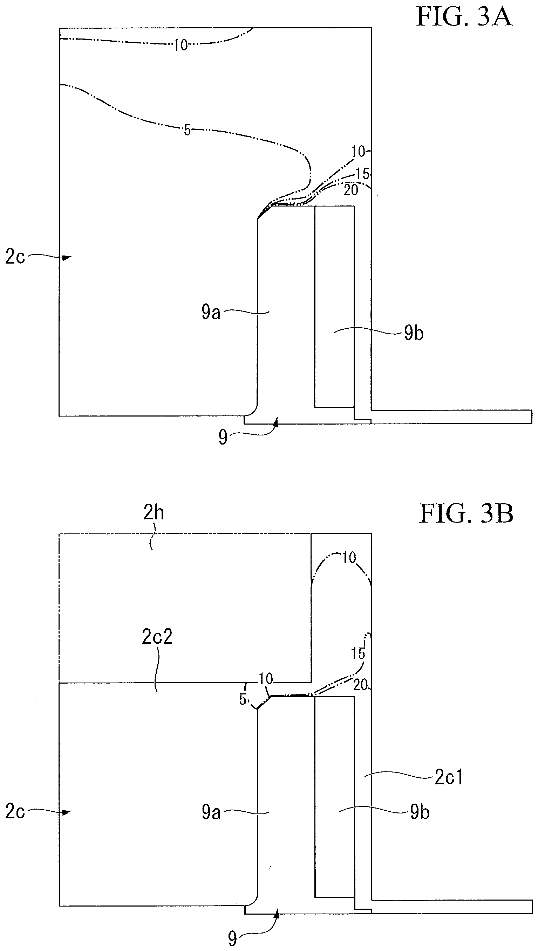

FIGS. 3A and 3B show simulation results verifying fluid velocity in the vicinity of the slinger 9 in a turbo pump 1 of the related art which does not have the partition wall 2h, and the turbo pump 1 of this embodiment which is provided with the partition wall 2h. FIG. 3A shows a simulation result verifying fluid velocity in the vicinity of the slinger 9 of the turbo pump 1 of the related art, by using a velocity contour line, and FIG. 3B shows a simulation result verifying fluid velocity in the vicinity of the slinger 9 of the turbo pump 1 of this embodiment, by using a velocity contour line. In FIGS. 3A and 3B, the numerals shown in the drawings are relative velocity between the contour lines and are not the absolute values of velocity.

As shown in FIG. 3A, if the turbo pump does not have the partition wall 2h, it can be seen that a flow toward the bearing side (the left side in the drawing) of the slinger 9 from the wing part 9b of the slinger 9 is formed and heat generated in the wing part 9b of the slinger 9 heads for the bearing 7 side of the slinger 9. On the other hand, as shown in FIG. 3B, in the case of the turbo pump 1 according to the invention of the present application which is provided with the partition wall 2h, it can be seen that a flow toward the bearing 7 side of the slinger 9 from the wing part 9b of the slinger 9 is not formed and heat generated in the wing part 9b of the slinger 9 does not easily reach the bearing 7 side of the slinger 9.

Further, in the turbo pump 1 of this embodiment, the pressure reduction chamber 2c1 is provided to extend further to the outside in the radial direction of the shaft 6 than the wing part 9b of the slinger 9. For this reason, the pressure reduction chamber 2c1 is widened, and thus the propellant X stirred in the pressure reduction chamber 2c1 due to the rotation of the wing part 9b can circulate inside of the pressure reduction chamber 2c1 without going out of the pressure reduction chamber 2c1. Accordingly, it becomes possible to more reliably prevent a back-flow of the propellant X from the pressure reduction chamber 2c1 to the bearing accommodation chamber 2c2.

Further, in the turbo pump 1 of this embodiment, the clearance flow path 2i is formed between the disk 9a of the slinger 9 and the partition wall 2h. For this reason, it is possible to form the clearance flow path 2i without performing working such as forming a through-hole in the housing 2 or installing a separate member, in order to form the clearance flow path 2i.

Further, in the turbo pump 1 of this embodiment, the partition wall 2h is provided as part of the housing 2. For this reason, it is possible to form the partition wall 2h only by changing the shape of the housing 2, and thus it is possible to easily form the partition wall 2h.

### (Second Embodiment)

Next, a second embodiment of the present invention will be described. In the description of this embodiment, the same parts as those in the first embodiment are denoted by the same reference numerals as those in the first embodiment and the description thereof is omitted or simplified.

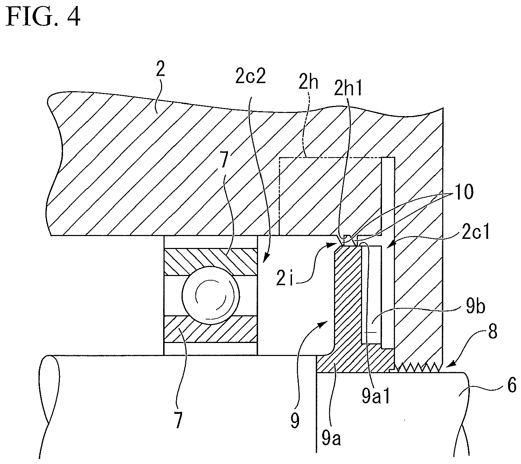

FIG. 4 is an enlarged view of the vicinity of the slinger 9 of the turbo pump 1 of this embodiment. As shown in this drawing, the turbo pump 1 of this embodiment has a plurality of projection portions 10 provided on the inner peripheral surface 2h1 of the partition wall 2h. A labyrinth seal is formed by the projection portions 10, and therefore, it becomes possible to further reduce the movement of the propellant X from the pressure reduction chamber 2c1 to the bearing accommodation chamber 2c2. The number of projection portions 10 is arbitrary, and the projection portions 10 may be provided at the disk 9a of the slinger 9.

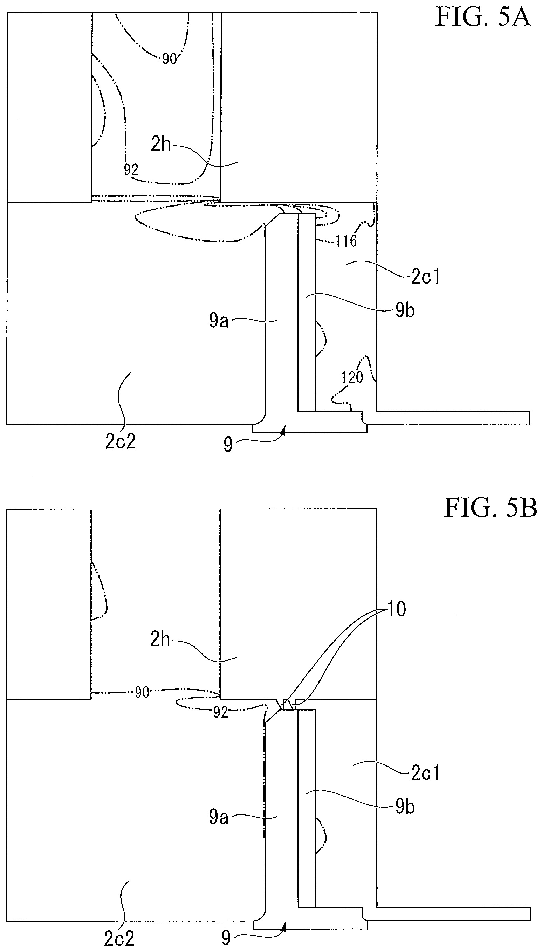

FIGS. 5A and 5B are simulation results verifying fluid velocity in the vicinity of the slinger 9 in the turbo pump 1 which does not have projection portions, and the turbo pump 1 of the second embodiment which is provided with the projection portions 10. FIG. 5A is a diagram showing a simulation result verifying fluid velocity in the vicinity of the slinger 9 of the turbo pump 1 which does not have projection portions, by using a velocity contour line, and FIG. 5B is a diagram showing a simulation result verifying fluid velocity in the vicinity of the slinger 9 of the turbo pump 1 of the second embodiment, by using a velocity contour line. In FIGS. 5A and 5B, the numerals shown in the drawings are relative velocity between the contour lines and are not the absolute values of velocity.

As is apparent from comparison of FIG. 5A with FIG. 5B, it can be seen that a flow toward the bearing 7 side of the slinger 9 from the wing part 9b of the slinger 9 is weakened by providing the projection portions 10 and thus heat generated in the wing part 9b of the slinger 9 does not easily reach the bearing 7 side of the slinger 9. Therefore, according to the turbo pump of the second embodiment, it is possible to further lower the temperature on the bearing 7 side of the slinger 9.

The preferred embodiments of the present invention have been described above with reference to the accompanying drawings. However, the present invention is not limited to the embodiments described above. The shapes, the combination, or the like of the respective constituent members shown in the embodiments described above is one example and various changes can be made based on design requirements or the like within a scope of the present invention.

For example, in the embodiments described above, a configuration has been described in which the liquid (cryogenic liquid) in the present invention is the propellant X. However, the present invention is not limited thereto and can be applied all of turbo pumps which deal with other cryogenic liquids.

Further, in the embodiments described above, a configuration has been described in which the pressure reduction chamber 2c1 is provided to extend further to the outside in the radial direction of the shaft 6 than the wing part 9b of the slinger 9. However, the present invention is not limited thereto, and it is also possible to adopt a configuration in which the pressure reduction chamber 2c1 has approximately the same length as the length in the radial direction of the wing part 9b.

Further, for example, it is also possible to adopt a configuration in which a through-hole is formed in the partition wall 2h and this through-hole is used as a clearance flow path, or a configuration in which a partition wall which is a separate body from the housing 2 is provided.

### Industrial Applicability

According to the present invention, in a turbo pump in which a bearing rotatably supporting a shaft is cooled by cryogenic liquid such as a propellant of a rocket engine, it becomes possible to prevent the cryogenic liquid around the bearing from rising in temperature or vaporizing due to heat which is generated by a slinger.

### Reference Signs List

1: turbo pump
2: housing
2a: impeller accommodation space
2b: turbine disk accommodation space
2c: central accommodation space
2c1: pressure reduction chamber
2c2: bearing accommodation chamber
2d: pump inlet opening
2e: scroll flow path
2f: introduction flow path
2g: turbine exhaust port
2h: partition wall
2h1: inner peripheral surface
2i: clearance flow path
3: impeller
4: turbine disk
5: blade cascade
6: shaft
7: bearing
8: seal part
9: slinger
9a: disk
9a1: outer peripheral surface
9b: wing part
10: projection portion
X: propellant (liquid)

## Claims

1. A turbo pump (1) comprising:
an impeller (3) which pressurizes liquid;
a turbine disk (4) at which a blade cascade (5) is provided;
a shaft (6) which connects the impeller (3) and the turbine disk (4);
a bearing (7) which rotatably supports the shaft (6);
a housing (2) which accommodates the impeller (3), the turbine disk (4), the shaft (6), and the bearing (7); and
a seal part (8) which is provided between the bearing (7) and the turbine disk (4),
wherein the bearing (7) is cooled by a cryogenic liquid,
**characterized in that** the turbo pump (1) further comprises:
a slinger (9) which is disposed between the bearing (7) and the seal part (8) and has a disk (9a) which is fixed to the shaft (6), and a plurality of wing parts (9b) which are provided on the seal part (8) side of the disk (9a); and
a partition wall (2h) which partitions the inside of the housing (2) into a pressure reduction chamber (2c1) in which the wing parts (9b) of the slinger (9) are disposed, and a bearing accommodation chamber (2c2) in which the bearing (7) is accommodated, the pressure reduction chamber (2c1) and the bearing accommodation chamber (2c2) being connected to each other through a clearance flow path (2i).

2. The turbo pump (1) according to Claim 1, wherein the pressure reduction chamber (2c1) is provided to extend further to the outside in a radial direction of the shaft (6) than the wing parts (9b) of the slinger (9).

3. The turbo pump (1) according to Claim 1 or 2, wherein the clearance flow path (2i) is formed between the disk (9a) of the slinger (9) and the partition wall (2h).

4. The turbo pump (1) according to Claim 1 or 2, wherein the partition wall (2h) is provided as part of the housing (2).

5. The turbo pump (1) according to Claim 3, wherein the partition wall (2h) is provided as part of the housing (2).

6. The turbo pump (1) according to Claim 1 or 2, further comprising: a projection portion (10) which is provided at the partition wall (2h) or the disk (9a) of the slinger (9) and disposed in the clearance flow path (2i).

7. The turbo pump (1) according to Claim 3, further comprising: a projection portion (10) which is provided at the partition wall (2h) or the disk (9a) of the slinger (9) and disposed in the clearance flow path (2i).

8. The turbo pump (1) according to Claim 4, further comprising: a projection portion (10) which is provided at the partition wall (2h) or the disk (9a) of the slinger (9) and disposed in the clearance flow path (2i).

9. The turbo pump (1) according to Claim 5, further comprising: a projection portion (10) which is provided at the partition wall (2h) or the disk (9a) of the slinger (9) and disposed in the clearance flow path (2i).

## Patentansprüche

1. Turbopumpe (1) umfassend:
ein Laufrad (3), das Flüssigkeit mit Druck beaufschlagt;
eine Turbinenscheibe (4), an der eine Schaufelkaskade (5) vorgesehen ist;
eine Welle (6), die das Laufrad (3) und die Turbinenscheibe (4) verbindet;
ein Lager (7), das die Welle (6) drehbar lagert;
ein Gehäuse (2), in dem das Laufrad (3), die Turbinenscheibe (4), die Welle (6) und das Lager (7) untergebracht ist; und
ein Dichtungsteil (8), das zwischen dem Lager (7) und der Turbinenscheibe (4) vorgesehen ist,
wobei das Lager (7) mittels einer kryogenen Flüssigkeit gekühlt wird,
**dadurch gekennzeichnet, dass** die Turbopumpe (1) ferner umfasst:
einen Schleuderring (9), der zwischen dem Lager (7) und dem Dichtungsteil (8) angeordnet ist und eine Scheibe (9a), die an der Welle (6) befestigt ist, und mehrere Flügelteile (9b) aufweist, die auf der Seite des Dichtungsteils (8) der Scheibe (9a) vorgesehen sind; und
eine Trennwand (2h), die das Innere des Gehäuses (2) in eine Druckreduktionskammer (2c1), in der die Flügelteile (9b) des Schleuderrings (9) angeordnet sind, und eine Lageraufnahmekammer (2c2), in der das Lager (7) aufgenommen ist, unterteilt, wobei die Druckreduktionskammer (2c1) und die Lageraufnahmekammer (2c2) durch einen Spaltströmungsweg (2i) miteinander verbunden sind.

2. Turbopumpe (1) nach Anspruch 1, wobei die Druckreduktionskammer (2c1) derart vorgesehen ist, dass sie sich in einer radialen Richtung der Welle (6) weiter nach außen erstreckt als die Flügelteile (9b) des Schleuderrings (9).

3. Turbopumpe (1) nach Anspruch 1 oder 2, wobei der Spaltströmungsweg (2i) zwischen der Scheibe (9a) des Schleuderrings (9) und der Trennwand (2h) gebildet ist.

4. Turbopumpe (1) nach Anspruch 1 oder 2, wobei die Trennwand (2h) als Teil des Gehäuses (2) vorgesehen ist.

5. Turbopumpe (1) nach Anspruch 3, wobei die Trennwand (2h) als Teil des Gehäuses (2) vorgesehen ist.

6. Turbopumpe (1) nach Anspruch 1 oder 2, ferner umfassend: einen Vorsprungsabschnitt (10), der an der Trennwand (2h) oder der Scheibe (9a) des Schleuderrings (9) vorgesehen und in dem Spaltströmungsweg (2i) angeordnet ist.

7. Turbopumpe (1) nach Anspruch 3, ferner umfassend: einen Vorsprungsabschnitt (10), der an der Trennwand (2h) oder der Scheibe (9a) des Schleuderrings (9) vorgesehen und in dem Spaltströmungsweg (2i) angeordnet ist.

8. Turbopumpe (1) nach Anspruch 4, ferner umfassend: einen Vorsprungsabschnitt (10), der an der Trennwand (2h) oder der Scheibe (9a) des Schleuderrings (9) vorgesehen und in dem Spaltströmungsweg (2i) angeordnet ist.

9. Turbopumpe (1) nach Anspruch 5, ferner umfassend: einen Vorsprungsabschnitt (10), der an der Trennwand (2h) oder der Scheibe (9a) des Schleuderrings (9) vorgesehen und in dem Spaltströmungsweg (2i) angeordnet ist.

## Revendications

1. Turbopompe (1) comprenant :
une turbine (3) qui met du liquide sous pression ;
un disque de turbine (4) sur lequel on prévoit une cascade de pales (5) ;
un arbre (6) qui raccorde la turbine (3) et le disque de turbine (4) ;
un palier (7) qui supporte, en rotation, l'arbre (6) ;
un logement (2) qui reçoit la turbine (3), le disque de turbine (4), l'arbre (6) et le palier (7) ; et
une partie de joint d'étanchéité (8) qui est prévue entre le palier (7) et le disque de turbine (4),
dans laquelle le palier (7) est refroidi par un liquide cryogénique,
**caractérisée en ce que** la turbopompe (1) comprend en outre :
une bague d'étanchéité (9) qui est disposée entre le palier (7) et la partie de joint d'étanchéité (8) et a un disque (9a) qui est fixé sur l'arbre (6), et une pluralité de parties d'aile (9b) qui sont prévues du côté de la partie de joint d'étanchéité (8) du disque (9a) ; et
une paroi de séparation (2h) qui sépare l'intérieur du logement (2) en une chambre de réduction de pression (2c1) dans laquelle les parties d'aile (9b) de la bague d'étanchéité (9) sont disposées, et en une chambre de logement de palier (2c2) dans laquelle le palier (7) est logé, la chambre de réduction de pression (2c1) et la chambre de logement de palier (2c2) étant raccordées entre elles par un chemin d'écoulement de jeu (2i).

2. Turbopompe (1) selon la revendication 1, dans laquelle la chambre de réduction de pression (2c1) est prévue pour s'étendre davantage vers l'extérieur dans une direction radiale de l'arbre (6) que les parties d'aile (9b) de la bague d'étanchéité (9).

3. Turbopompe (1) selon la revendication 1 ou 2, dans laquelle le chemin d'écoulement de jeu (2i) est formée entre le disque (9a) de la bague d'étanchéité (9) et la paroi de séparation (2h).

4. Turbopompe (1) selon la revendication 1 ou 2, dans laquelle la paroi de séparation (2h) est prévue comme une partie du logement (2).

5. Turbopompe (1) selon la revendication 3, dans laquelle la paroi de séparation (2h) est prévue comme une partie du logement (2).

6. Turbopompe (1) selon la revendication 1 ou 2, comprenant en outre : une partie en saillie (10) qui est prévue au niveau de la paroi de séparation (2h) ou du disque (9a) de la bague d'étanchéité (9) et disposée dans le chemin d'écoulement de jeu (2i).

7. Turbopompe (1) selon la revendication 3, comprenant en outre : une partie de saillie (10) qui est prévue au niveau de la paroi de séparation (2h) ou du disque (9a) de la bague d'étanchéité (9) et disposée dans le chemin d'écoulement de jeu (2i).

8. Turbopompe (1) selon la revendication 4, comprenant en outre une partie de saillie (10) qui est prévue au niveau de la paroi de séparation (2h) ou du disque (9a) de la bague d'étanchéité (9) et disposée dans le chemin d'écoulement de jeu (2i).

9. Turbopompe (1) selon la revendication 5, comprenant en outre : une partie de saillie (10) qui est prévue au niveau de la paroi de séparation (2h) ou du disque (9a) de la bague d'étanchéité (9) et disposée dans le chemin d'écoulement de jeu (2i).
